# EUROPÄISCHE PATENTSCHRIFT

(11) **EP 1 714 029 B1**
(45) Veröffentlichungstag und Bekanntmachung des Hinweises auf die Patenterteilung: **15.06.2016**
(21) Anmeldenummer: 05701620.6
(22) Anmeldetag: 31.01.2005
(51) Int. Cl.: F03D 1/00

(54) **OFFSHORE-WINDENERGIEANLAGE MIT EINGANGSSCHLEUSE**
OFFSHORE-WIND POWER PLANT HAVING AN ENTRY LOCK
INSTALLATION EOLIENNE OFFSHORE COMPRENANT UN SAS D'ENTREE

(30) Priorität: 02.02.2004 DE 102004005179
(43) Veröffentlichungstag der Anmeldung: 25.10.2006
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2005/050387
(87) Internationale Veröffentlichungsnummer: WO 2005/073551

(56) Entgegenhaltungen:
- EP-A- 1 134 410
- EP-A- 1 389 581
- WO-A-2004/076853
- DE-A1- 4 143 243
- DE-A1- 10 310 036
- GB-A- 457 231
- GB-A- 190 724 481
- US-A- 4 842 224
- PATENT ABSTRACTS OF JAPAN Bd. 014, Nr. 202 (C-0713), 25. April 1990 (1990-04-25) & JP 02 041180 A (SHINJI KANDA), 9. Februar 1990 (1990-02-09)
- PATENT ABSTRACTS OF JAPAN Bd. 2000, Nr. 03, 30. März 2000 (2000-03-30) & JP 11 350588 A (SEKISUI HOUSE LTD), 21. Dezember 1999 (1999-12-21)

## Beschreibung

Die Erfindung betrifft eine Windenergieanlage, insbesondere eine Windenergieanlage für den Offshore-Bereich.

Windenergieanlagen verfügen allgemein über einen Eingang und es ist auch bekannt, dass im Inneren der Windenergieanlage elektrische bzw. elektronische Komponenten untergebracht werden. Dies kann in einem sogenannten E-Raum geschehen oder auch in mehreren solcher Räume und elektrische bzw. elektronische Komponenten sind typischerweise Wechselrichter, Steuerungseinrichtungen, Transformatoren, Messeinrichtungen etc., also Einrichtungen, die schon heute im Inneren der Windenergieanlage untergebracht sind, um einerseits den elektrischen Strom zu leiten und andererseits die Anlage zu überwachen, zu steuern, zu regeln etc.

Dann, wenn eine solche Windenergieanlage als Offshore-Projekt verifiziert wird, ist zumindest dann, wenn die Windenergieanlage in Salzwasser steht, zu erwarten, dass beim Öffnen des Eingangs der Windenergieanlage salziges Wasser und/oder salzhaltige Luft in das Innere der Anlage gelangen kann. Selbst wenn der Eingang relativ hoch über dem Meeresspiegel liegt, kann immer noch sehr feuchte und damit sehr salzhaltige Luft in das Innere der Anlage gelangen.

Man ist deshalb schon dazu übergegangen, den Eingang aus dem Turm ganz zu entfernen und den Eingang in die Gondel der Windenergieanlage zu legen, wobei Vorrichtungen ausgebildet sind, mittels eines Hubschraubers auf der Gondel zu landen oder zumindest das Bedienungspersonal herabzulassen.

DE 198 59 628 C1 zeigt eine Offshore-Windenergieanlage, bei der hohle Bestandteile der Windenergieanlage mit einem erhöhten Luftdruck versehen werden.

Aus EP 1 134 410 A1 ist eine Offshore-Windkraftanlaqe bekannt, welche mit einer Hubschrauberplattform auf Gondelhöhe versehen ist und in welcher auch die relevanten elektrischen und elektronischen Bauteile in Höhe der Gondel in einem eigens dazu vorgesehenen Container untergebracht sind.

Der Erfindung liegt die Aufgabe zugrunde, die bisherigen Schwierigkeiten zu überwinden und Nachteile zu vermeiden, insbesondere ein ständiges Anlanden von Personen auch bei so schlechtem Wetter zu erlauben, wenn das Fliegen mittels Hubschraubern nicht mehr möglich ist.

Die Erfindung löst die Aufgabe mit einer Windenergieanlage mit dem Merkmal nach Anspruch 1. Vorteilhafte Weiterbildungen sind in den Unteransprüchen beschrieben.

Erfindungsgemäß ist vorgesehen, dass von außerhalb der Anlage gesehen, hinter dem Eingang eine Schleuse ausgebildet ist. Diese Schleuse verhindert das Eindringen von Feuchtigkeit, salzhaltiger Luft etc. in das Innere der Anlage und verfügt im Bedarfsfall auch über eine entsprechende Drainage nach außen, falls Wasser in das Innere der Schleuse gelangen sollte. Die Schleuse ist bevorzugt aus Kunststoff, z.B. glasfaserverstärktem Kunststoff, also einem Material, was ohnehin für die Fertigung von Windenergieanlagen (z.B. der Rotorblätter) eingesetzt wird. Gleichzeitig kann die Schleuse auch als Umkleideraum dienen, da das Bedienpersonal ohnehin spezielle Neoprenanzüge tragen sollte (muss), wenn es von außen an der Anlage anlandet und diese besteigen möchte.

Die Schleuse weist nun mindestens zwei Öffnungen auf, nämlich eine Öffnung hin zum Eingang der Anlage und eine weitere Öffnung hin zum Inneren der Anlage, also den Räumen (E-Raum) mit den elektronischen Komponenten. Wenn die Schleuse Richtung E-Raum geöffnet wird, dann wird Luft aus dem Inneren der Anlage in die Schleuse gepresst, das Personal muss also praktisch gegen den Luftstrom in den E-Raum gehen. Die Luft aus dem Inneren der Anlage wird bevorzugt in der Gondel von außen her angesaugt und in das Innere des Turms gedrückt.

Mithin herrscht also im Inneren der Anlage ein leicht höherer Luftdruck als im Inneren der Schleuse, wenn diese geöffnet wird, so dass jedwedes Eindringen von Wasser bzw. feuchter Luft, welches sich in der Schleuse befindet, in das Innere der Anlage sicher vermieden wird.

Wenn die Schleuse aus einem nicht rostenden Material, z.B. Kunststoff gefertigt ist, so kann auch sicher verhindert werden, dass die gesamte Schleuseneinrichtung durch eingedrungenes salzhaltiges Wasser bzw. eingedrungene salzhaltige Luft in Mitleidenschaft gezogen wird. Die Schleuse oder wenigstens Teile davon können auch aus Aluminium und/oder Nirosta (nicht rostendem Stahl) ausgeführt sein.

Eine weitere Ergänzung zu Vorbeschriebenem weist die Schleuse auch eine eigene Dusche bzw. Sanitäreinrichtungen sowie Ruheeinrichtungen, Erste-Hilfe-Ausstattung etc. auf, Wenn doch einmal größere Mengen salzhaltiges Wasser bzw. salzhaltiger Luft in die Schleuse eingedrungen sein sollten, kann diese z.B. mittels der Dusche weitestgehend von den Salzelementen befreit werden.

Die Erfindung ist nachfolgend anhand eines zeichnerisch dargestellten Ausführungsbeispiels näher erläutert. Es zeigen:
- Fig. 1: eine Ansicht von außen auf den Eingang eines Turms einer Windenergieanlage gemäß dem ersten Ausführungsbeispiel;
- Fig. 2: einen Schnitt durch Fig. 1 gemäß der Ebene A-A;
- Fig. 3: einen Längsschnitt gemäß der Ebene B-B in Fig. 2;
- Fig. 4: einen vergrößerten Querschnitt durch den gesamten unteren Turmteil der Windenergieanlage;
- Fig. 5: einen größeren Querschnitt gemäß der Ebene C-C in Fig. 4; und
- Fig. 6: einen Teillängsschnitt gemäß der Ebene B-B in Fig. 2 gemäß einem zweiten Ausführungsbeispiel.

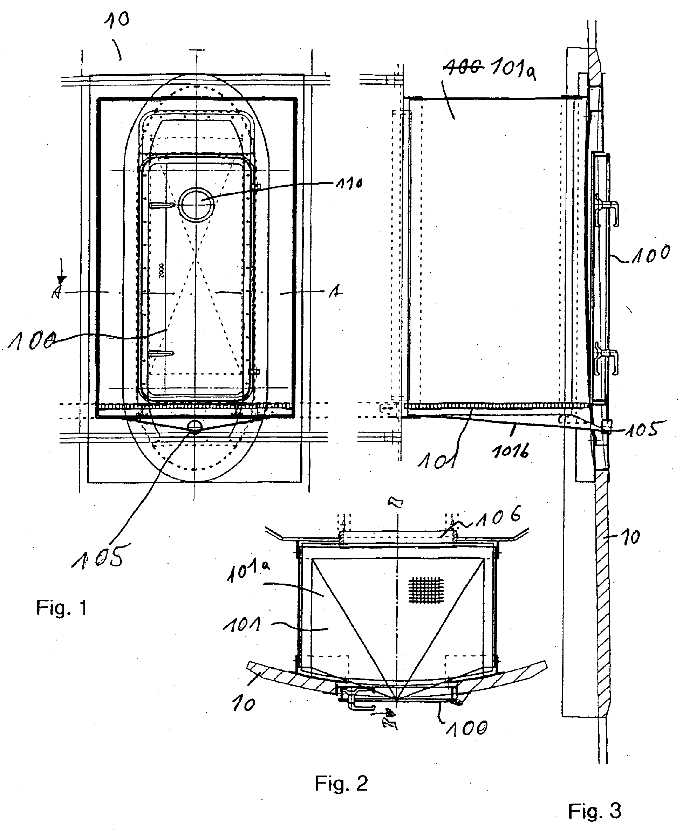

Die Figuren 1 bis 5 zeigen Details einer erfindungsgemäßen Windenergieanlage mit einem Leistungsmodul. Dabei wird insbesondere beschrieben, wie zwischen einem äußeren Eingang zum Turm 10 der Windenergieanlage und dem Inneren 101c der Anlage, also dort, wo die elektronischen und elektrischen wichtigen Teile des Leistungsmoduls liegen, eine Schleuse ausgebildet ist, welche verhindert, dass für den Fall, dass die gesamte Windenergieanlage als Offshore-Windenergieanlage eingesetzt wird, salzhaltige Luft bzw. Salzwasser in das Innere der Anlage gelangen kann und somit elektrische oder elektronische Teile beschädigen oder zerstören kann.

Fig. 1 zeigt eine Aufsicht von außen auf die Eingangstür 100 der Windenergieanlage. Die Eingangstür 100 weist ein Bullauge 110 auf. Dieses Bullauge 110 erlaubt z.B. aus der geschlossenen Schleuse heraus die Wetterbedingungen zu erkennen. Basierend darauf kann dann die Entscheidung getroffen werden, ob die Windenergieanlage verlassen werden kann oder nicht. Im unteren Bereich der Schleuse ist eine Öffnung 105 vorgesehen, durch welche Wasser im Inneren der Schleuse direkt wieder nach außen abfließen kann.

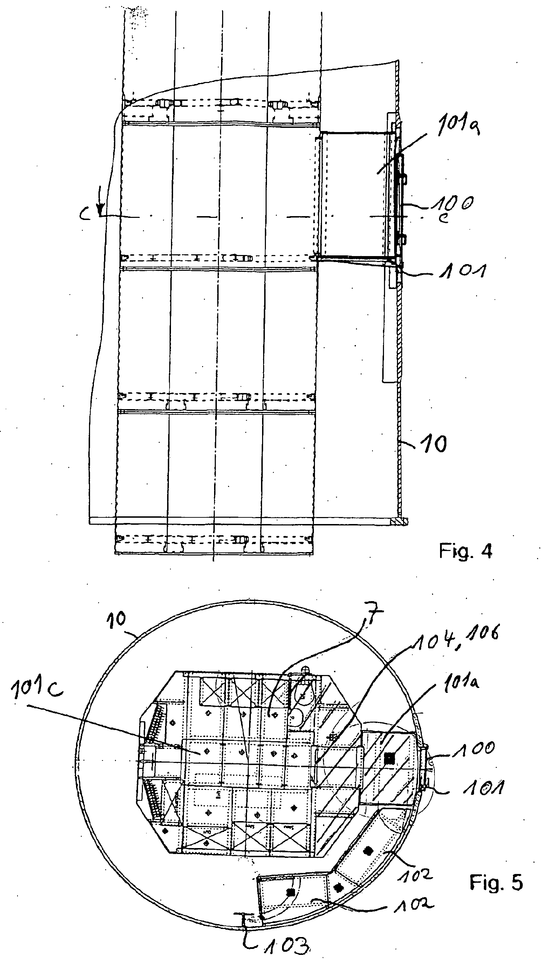

Fig. 2 zeigt nochmals einen vergrößerten Ausschnitt gemäß der Ebene A-A von Fig. 1 und ebenfalls einen Ausschnitt in den Schleuseneingangsraum aus Fig. 5. Hier ist ebenfalls die Plattform 101 sowie die Tür 100 zu sehen, welche nach außen führt. Ferner ist eine weitere Tür 106 vorgesehen, durch welche man in das Innere der Windenergieanlage gelangen kann.

Fig. 3 zeigt einen Längsschnitt gemäß der Ebene B-B von Fig. 1. Somit zeigt Fig. 3 ebenfalls eine weitere Detailansicht aus Fig. 4. Dort ist gut zu erkennen, dass der Boden des Schleuseneingangsraums 101a am Turminneren selbst befestigt ist und dieser Boden ist bevorzugt feuchtigkeitsdurchlässig, so dass dann, wenn beim Öffnen der Eingangstür 100 Spritzwasser o.dgl. in den Schleuseneingangsraum 101a gelangt, durch den Boden abfließen kann. Unterhalb des Bodens, welcher bevorzugt auch als Gitterrost ausgebildet ist, ist eine nach außen zur Turmwandung hin geneigte wasserundurchlässige Platte 101b ausgebildet. Wenn also Spritzwasser oder auch Feuchtigkeit von der Kleidung des Bedienpersonals in diesen Raum durch das Gitterrost abtropft, so kann dieses Wasser direkt über die Platte 101b wieder nach außen durch eine Öffnung 105 abfließen.

Wie auch in Fig. 5 aber auch in den Fig. 3 und 2 zu erkennen, kann der Schleuseneingangsraum 101 a durch eine weitere Tür 106 verschließbar sein. Diese Tür, welche auch bevorzugt feuchtigkeits- und wasserdicht ist, trennt den Schleuseneingangsraum 101a zum Schleusenzentralraum mit den bereits beschriebenen sanitären Einrichtungen.

Fig. 4 zeigt in einem Teillängsschnitt des unteren Turms 10 verschiedene Ebenen, auf die sich unter Umständen das Leistungsmodul unterteilt und in der Figur 4, rechts oben den äußeren Eingang 100 zum Turminneren. Dieser Eingang ist regelmäßig ein Tor 100 bzw. eine Tür, die jeweils verschließbar ist. Wie bereits in der Fig. 4 zu erkennen, geht von dieser Tür 100 nach innen im Wesentlichen senkrecht zur Turmwandung 10 eine Plattform 101 ab, welche bevorzugt direkt mit dem Turm 10 verbunden ist, so dass diese Plattform bereits dann begehbar ist, wenn der Turm 10 aufgestellt ist.

Fig. 5 zeigt die in Fig. 4 dargestellte Ausführung mit Blick von oben, wobei das Rohrmodul 7 zu sehen ist wie auch das Tor 100 und die Plattform 101. Seitlich zu der Plattform gibt es weitere Plattformen 102, bevorzugt Gitterroste, die auch fest an der Turmwandung 10 angebracht sind und die es ermöglichen, dass eine Person schon in einem sehr frühzeitigen Stadium nach dem Aufbau der Windenergieanlage durch das Tor 100 über die vorbeschriebenen Plattformen 101, 102 zu der in dem Turm vorgesehenen Leiter 103 gehen kann.

Wie auch in der Aufsicht, wie aber auch in Fig. 4 zu sehen, schließt sich direkt an die Plattform 101 zum Turminneren hin ein Raum an, welcher gegebenenfalls zusammen mit dem Raum, der sich oberhalb der Plattform 101 ausbildet, eine geschlossene Schleuse 101a bildet. Die Fläche dieses Schleusenraumes 101a ist in Fig. 5 gestrichelt dargestellt.

In diesen Raum tritt Bedienungspersonal von außen her ein und kann sich in diesem Raum möglicherweise umziehen, zumindest kurzfristig aufhalten. Auch sind in diesem Raum sanitäre Einrichtungen eingerichtet. In diesem Schleusenraum gibt es eine weitere Tür 104, 106, die zum Inneren des Turms, also zu den Einrichtungen des Leistungsmoduls gelangen kann.

Diese Tür 104, 106 ist bevorzugt feuchtigkeitsdicht, so dass dann, wenn u.U. Feuchtigkeit in den Schleusenraum gelangt, nicht durch die Tür 104, 106 in das Innere der Anlage gelangen kann. Weiterhin kann diese Tür auch rauchdicht ausgebildet sein, um die Schleuse rauchdicht bzw. gasdicht gegen das Innere der Anlage abzuschließen. Im Fall von Rauchentwicklung im Turm kann die Schleuse damit als Fluchtraum dienen, der Schutz vor giftigen Gasen bietet.

Im Inneren der Windenergieanlage sind Mittel vorgesehen, um den Luftdruck innerhalb der Windenergieanlage zu steuern. Dabei wird der Luftdruck vorzugsweise derart gesteuert, dass er innerhalb der Windenergieanlage höher ist als im Inneren 101a der Schleuse, so dass beim Öffnen der Schleuse ein Eindringen von Wasser bzw. feuchter Luft in das Innere der Anlage vermieden wird. Dazu wird die Luft im Inneren der Windenergieanlage vorzugsweise in der Gondel von außen her angesaugt und in das Innere des Turmes gedrückt.

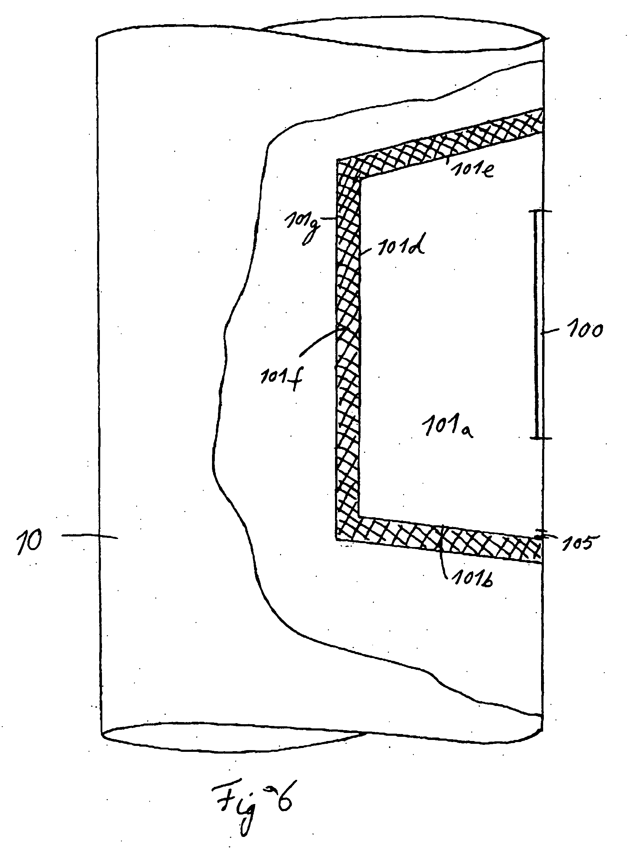

Fig. 6 zeigt einen Teillängsschnitt gemäß der Ebene B-B in Fig. 2 gemäß einem zweiten Ausführungsbeispiel. Hierbei beruht das zweite Ausführungsbeispiel im Wesentlichen auf dem ersten Ausführungsbeispiel gemäß den Figuren 1-5. In Fig. 6 ist somit ein Turm 10 einer Windenergieanlage mit einem Eingang 100 gezeigt, welcher in einen Schleusenraum 101a führt. Der Schleusenraum 101a weist dabei einen Boden 101b, eine Wand 101d sowie eine Decke 101e auf. Diese Wandungen stellen dabei die Innenwandungen der Schleuse 101a dar. Ferner ist eine Außenwandung 101g gezeigt, welche in einem vorgegebenen Abstand zur Innenwandung angeordnet ist. In dem Zwischenraum zwischen der Innenwandung 101b, 101d, 101e und der Außenwandung 101g ist ein Dämmmaterial 101f angeordnet. Die Außenwandung 101g ist vorzugsweise aus Stahl hergestellt, und die Innenwandung der Schleuse wird vorzugsweise aus einem glasfaserverstärkten Kunststoff GFK hergestellt. Das Dämmmaterial 101f ist vorzugsweise als Isolierstoff ausgebildet, welcher beispielsweise aus dem Hausbau bekannt ist. Somit kann das Dämmmaterial 101f beispielsweise aus Steinwolle, Glaswolle oder dergleichen ausgebildet sein. Alternativ dazu sind auch andere Dämmmaterialen einsetzbar, welche schlechte Wärmeleiter sind und gleichzeitig wärme- bzw. hitzeresistent sind.

Durch die mehrschalige Ausgestaltung der Wand der Schleuse im Inneren der Windenergieanlage kann der Schleusenbereich als ein Fluchtraum dienen im Falle eines Feuers in der Windenergieanlage. Somit wird der Schleusenraum 101a zum einen rauchdicht und zum anderen feuerfest ausgestaltet. Durch die Auswahl von Stahl als Außenwand 101g des Schleusenbereichs wird damit ein Material vorgesehen, welches nicht brennbar ist. Da Stahl jedoch einen guten Wärmeleiter darstellt, wird zusätzlich zu der Außenwandung 101g ein Dämm- bzw. Isoliermaterial 101f sowie eine Innenwandung 101b, 101d und 101e der Schleuse 101a vorgesehen, wobei die Innenwandung nicht aus Stahl, sondern aus einem anderen Material hergestellt ist, welches vorzugsweise unempfindlich gegenüber der salzhaltigen Meeresluft ist.

## Patentansprüche

1. Windenergieanlage mit einem Turm (10) und einem Eingang (100) in dem Turm und einem Innenraum (101) im Turminneren der Windenergleanlage, in welchem elektrische bzw. elektronische Komponenten der Windenergieanlage untergebracht sind,
**dadurch gekennzeichnet, dass** zwischen dem Eingang (100) der Windenergieanlage und dem Innenraum (101c), in dem die elektronischen Komponenten untergebracht sind, eine Schleuse (101a, 104, 108) ausgebildet ist, welche verhindert, dass durch den Eingang (100) eindringendes Wasser und/oder beim Öffnen des Eingangs (100) eindringende, salzhaltige bzw. feuchte Luft in den Innenraum (101c) der Anlage gelangt, wobei die Schleuse (101a) einen Abfluss (105) aufweist, durch den in die Schleuse eindringendes Wasser abfließen kann.

2. Windenergieanlage nach Anspruch 1,
**dadurch gekennzeichnet, dass** die Schleuse (101a, 101b, 104, 106) aus einem nicht rostenden Material, z.B. einem Kunststoff, besonders bevorzugt glasfaserverstärktem Kunststoff ausgebildet ist.

3. Windenergieanlage nach einem der vorhergehenden Ansprüche,
**dadurch gekennzeichnet, dass** die Schleuse (101a) auch als Umkleideraum dient.

4. Windenergieanlage nach einem der vorhergehenden Ansprüche,
**dadurch gekennzeichnet, dass** Luft aus dem Inneren der Windenergieanlage bei Öffnung der Schleuse zum Inneren (101a) in die Schleuse gedrückt wird.

5. Windenergieanlage nach einem der vorhergehenden Ansprüche,
**dadurch gekennzeichnet, dass** der Luftdruck im Inneren der Anlage größer ist, als in der Schleuse.

6. Windenergieanlage nach einem der Ansprüche 1 bis 5, wobei die Windenergieanlage einen Turm (10) aufweist, mit welchem die Schleuse (101a) direkt verbunden ist.

7. Windenergieanlage nach einem der Ansprüche 1 bis 6, wobei die Schleuse (101a) eine zweite Tür (104, 106) aufweist, welche zum Innenraum (101c) führt, wobei die zweite Tür (104, 106) rauchdicht ausgestaltet ist.

8. Windenergieanlage nach einem der Ansprüche 1 bis 7, wobei die Schleuse (101a) eine Innenwandung (101b, 101d, 101e) und eine Außenwandung (101g) aufweist, wobei zwischen der Innenwandung (101b, 101d, 101e) und der Außenwandung (101g) Isoliermaterial (101f) angeordnet ist.

9. Windenergieanlage nach Anspruch 8, wobei das Isoliermaterial (101f) ein wärmeresistentes und schlecht wärmeleitendes Material aufweist.

## Claims

1. A wind power installation comprising a pylon (10) and an entry (100) in the pylon and an internal space (101) in the pylon interior of the wind power installation, in which electrical or electronic components of the wind power installation are disposed,
**characterised in that** provided between the entry (100) of the wind power installation and the internal space (101c) in which the electronic components are disposed is a lock (101a, 104, 108) which prevents water that enters through the entry (100) and/or salt-bearing or moist air which enters when the entry (100) is opened from passing into the internal space (101c) of the installation, wherein the lock (101a) has a drain (105) through which water which passes into the lock can drain away.

2. A wind power installation according to claim 1 **characterised in that** the lock (101a, 101b, 104, 106) is formed from a non-rusting material, for example a plastic material, particularly preferably glass fibre reinforced plastic material.

3. A wind power installation according to one of the preceding claims **characterised in that** the lock (101a) also serves as a clothes changing room.

4. A wind power installation according to one of the preceding claims **characterised in that** the air is urged out of the interior of the wind power installation into the lock when the lock is opened to the interior (101a).

5. A wind power installation according to one of the preceding claims **characterised in that** the air pressure in the interior of the installation is greater than in the lock.

6. A wind power installation according to one of claims 1 to 5 wherein the wind power installation has a pylon (10) to which the lock (101a) is directly connected.

7. A wind power installation according to one of claims 1 to 6 wherein the lock (101a) has a second door (104, 106) which leads to the internal space (101c), the second door (104, 106) being smoke-tight.

8. A wind power installation according to one of claims 1 to 7 wherein the lock (101a) has an inside wall (101b, 101d, 101e) and an outside wall (101g), insulating material (101f) being arranged between the inside wall (101b, 101d, 101e) and the outside wall (101g).

9. A wind power installation according to claim 8 wherein the insulating material (101f) has a material which is heat-resistant and a poor thermal conductor.

## Revendications

1. Eolienne avec une tour (10) et une entrée (100) dans la tour et un espace intérieur (101) à l'intérieur de la tour de l'éolienne, dans lequel des composants électriques ou électroniques de l'éolienne sont logés,
**caractérisée en ce qu'**un sas (101a, 104, 108) est réalisé entre l'entrée (100) de l'éolienne et l'espace intérieur (101c), dans lequel les composants électroniques sont logés, lequel sas empêche que de l'eau pénétrant par l'entrée (100) et/ou de l'air humide ou contenant du sel pénétrant lors de l'ouverture de l'entrée (100) ne parvienne dans l'espace intérieur (101c) de l'éolienne, le sas (101a) présentant une évacuation (105), par laquelle de l'eau pénétrant dans le sas peut s'écouler.

2. Eolienne selon la revendication 1,
**caractérisée en ce que** le sas (101a, 101b, 104, 106) est réalisé en un matériau inoxydable, par exemple une matière plastique, de manière particulièrement préférée en une matière plastique renforcée de fibres de verre.

3. Eolienne selon l'une quelconque des revendications précédentes,
**caractérisée en ce que** le sas (101a) sert aussi de vestiaire.

4. Eolienne selon l'une quelconque des revendications précédentes,
**caractérisée en ce que** de l'air provenant de l'intérieur de l'éolienne est pressé lors de l'ouverture du sas vers l'intérieur (101a) dans le sas.

5. Eolienne selon l'une quelconque des revendications précédentes,
**caractérisée en ce que** la pression d'air est plus grande à l'intérieur de l'éolienne que dans le sas.

6. Eolienne selon l'une quelconque des revendications 1 à 5, l'éolienne présentant une tour (10), à laquelle le sas (101a) est directement relié.

7. Eolienne selon l'une quelconque des revendications 1 à 6, le sas (101a) présentant une seconde porte (104, 106) qui mène à l'espace intérieur (101c), la seconde porte (104, 106) étant configurée de manière étanche à la fumée.

8. Eolienne selon l'une quelconque des revendications 1 à 7, le sas (101a) présentant une paroi intérieure (101b, 101d, 101e) et une paroi extérieure (101g), du matériau isolant (101f) étant agencé entre la paroi intérieure (101b, 101d, 101e) et la paroi extérieure (101g).

9. Eolienne selon la revendication 8, le matériau isolant (101f) présentant un matériau résistant à la chaleur et à mauvaise conduction thermique.
